# EUROPÄISCHE PATENTANMELDUNG

(11) **EP 0 916 476 A1**
(43) Veröffentlichungstag der Anmeldung: **19.05.1999**
(21) Anmeldenummer: 98119262.8
(22) Anmeldetag: 13.10.1998
(51) Int. Cl.: B29C 65/08, B65B 51/22, B65B 29/02

(54) **Vorrichtung und Verfahren zum Verbinden von Filtermaterialien mittels Ultraschall**

(30) Priorität: 18.11.1997 DE 19751038
(71) Anmelder: SCHOBER GmbH Werkzeug- und Maschinenbau, D-71735 Eberdingen (DE)
(72) Erfinder: Born, Ralf-Hendrik, 71655 Vaihingen/Enz (DE)
(74) Vertreter: Steimle, Josef, Dipl.-Ing.

(57) **Zusammenfassung**

Die Erfindung betrifft ein Verfahren und eine Vorrichtung zum Verbinden von Filtermaterialien mittels Ultraschall mit einer Siegelwalze (5) und einer Ultraschall-Einrichtung (6), welche einen Siegelspalt bilden, zwischen den mindestens zwei miteinander zu verbindende Filtermaterialbahnen (4,11) mit positionierten Füllmengen (3) geführt werden, wobei die Siegelwalze Ausnehmungen (9) für die Füllmengen und diese Ausnehmungen umgebende Ränder aufweist, über die mittels der Ultraschall-Einrichtung die Filtermaterialbahnen miteinander Verscheißar sind.

## Beschreibung

Die Erfindung betrifft eine Vorrichtung und ein Verfahen zum Verbinden, insbes. Verschweißen oder Siegeln von Filtermaterialien mittels Ultraschall

Die bekannten Verfahren arbeiten alle nach dem Prinzip "Druck und Wärme", wobei das Filtermaterial, welches mindestens zweilagig mit dazwischen plazierter Füllung ist, zwischen siegelelemente geführt wird, wobei dann das Filtermaterial in der Randzone verschweißt wird.

Nachteilig ist, dass bei rotativen Werkzeugen teure Stromdrehführungen, wie Schleifringkörper verwendet werden, die entsprechend störungsanfällig sind.

Die bekannten Verfahren arbeiten entweder im Hubprinzip, also derart, dass das Filtermaterial während der Schweißvorgang steht und die Siegelelemente auf die Filtermaterialbahn aufgebracht werden oder im Rotationsprinzip, bei dem die Filtermaterialbahn kontinuierlich zwischen rotierenden Siegelwerkzeugen durchgeführt werden.

Nachteilig bei beiden bekannten Verfahren ist, dass die notwendige Wärme indirekt in die Siegelelemente oder Siegelwerkzeuge eingebracht werden muss, in Form von Heizpatronen oder anderen Erwärmungselementen, die ihre Energie dann an die Siegelwerkzeuge abgeben. Weiter nachteilig ist, dass beim Hub- wie auch beim Rotationsverfahren ein Positiv- und Negativwerkzeug notwendig wird.

Weiter nachteilig ist, dass die Vorrichtung so ausgeführt sind, dass bei Maschinenstillständen die Siegelelemente von der Materialbahn abgehoben werden müssten, das sonst das Filtermaterial und die Füllung verbrennt und eine erhebliche Brandgefahr bestehen kann.

Weiter nachteilig ist, dass die indirekte Erwärmung träge ist und daher Qualitätsprobleme am Produkt entstehen können, die nur durch eine aufwendigere Regelung verhindert werden können.

Der Erfindung liegt die Aufgabe zugrunde, eine Vorrichtung und ein Verfahren zu entwickeln, das die bekannten Nachteile nicht hat und kostengünstig und unter vertretbarem Aufwand in neue Herstellungsmaschinen eingebaut aber auch in vorhandene Maschinen nachgerüstet werden kann.

Der Vorrichtung werden mindestens zwei Filtermaterialbahnen mit positionierten Füllmengen zugeführt. Die Vorrichtung hat eine rotierende Siegelwalze mit je nach Form des Aufgußbeutels ausgeführten Ausnehmungen, die die Füllmenge während des Siegelvorgangs aufnehmen kann. Die rotierende Siegelwalze kann vollflächig aber auch nur teilweise profiliert sein. Die Siegelkontur kann beliebig sein. Die Sonotrode, welche Bestandteil der Ultraschall-Einrichtung ist, erzeugt durch Schwingen, während der Berührung des Filtermaterials mit der Siegelwalze, die für die Verschweißung notwendige Wärme. Vorteilhaft ist, dass nur ein Formwerkzeug benötigt wird, dass das Gegenwerkzeug, hier die Ultraschall-Einrichtung, stehend angebracht ist und dass durch einfaches Zuschalten der Regelung sofort die Verschweißung möglich ist, ohne dass das Werkezg oder die Ultra-Schalleinrichtung zuvor von der Materialbahn abgehoben wurde.

Weiterhin vorteilhaft ist, dass die erforderlihe Wärme direkt an der Sonotrodenspitze der Ultra-Schalleinrichtung entsteht und daher genau in dem Bereich, wo die Energie benötigt wird. Beim Abschalten der Ultraschall-Regelung wird die Energiezufuhr sofort unterbrochen und ein Anbrennen der Filter-Materialbahn oder Füllmenge ist ausgeschlossen.

Vorteilhaft ist weiter, dass keine Drehanschlüsse, wie Schleifringkörper o.dgl. mehr notwendig sind, da das rotierende Formwerkzeug nicht mehr beheizt werden muss.

Vorteilhaft ist noch, dass die aufgewendete Energie erheblich reduziert werden kann, da sie gezielt ins Produkt eingebracht wird.

Mit dem erfindungsgemäßen Verfahren können die folgenden Produkte bearbeitet werden, Aufgußbeutel in jeder beliebigen Form, mit beliebiger Füllung (Aufgußmasse), Filter aus Papier oder Papiermischungen mit Kunststoffanteilen, Filtervlies oder ähnlichen Materialien Ränder von Produkten, nämlich die Zone, die aus zwei oder mehr Lagen Filterpapier besteht, die durch Druck und/oder Wärme miteinander verschweißt (verbunden) sind und die Füllung zwischen den unterschiedlichen Lagen eingrenzen.

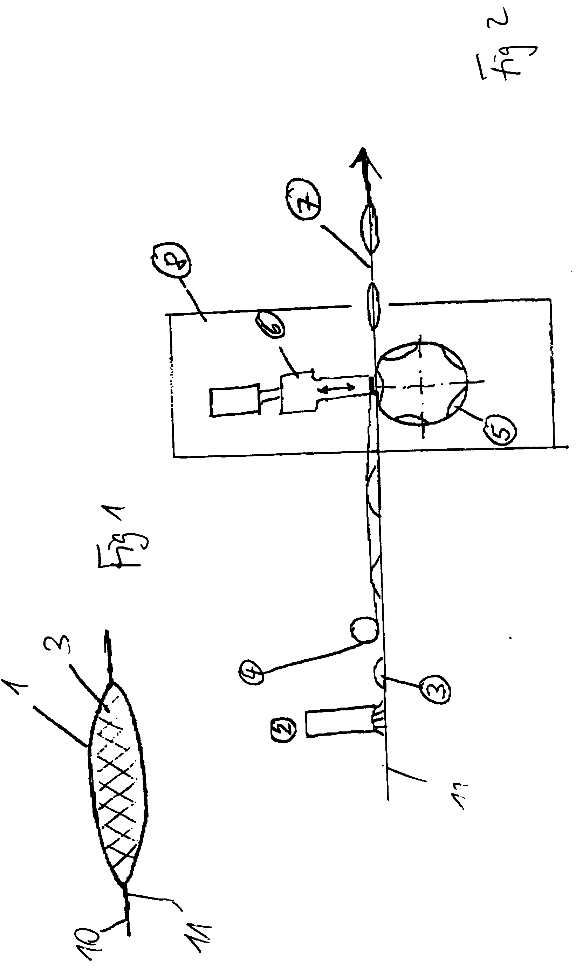

Die Figur 1 zeigt einen Aufgussbeutel 1 aus einer oberen Filtermaterialbahn 10 und einer unteren Filtermaterialbahn 11 sowie einer zwischen den Bahnen angeordneten Füllmenge 3.

Die Figur 2 zeigt die untere Filtermaterialbahn 11, das Dosiergerät 2, die Füllmenge 3, und die darauf abgelegte obere Filtermaterialbahn 10. Diese noch nicht miteinander verbundenen Bahnen werden in eine Siegelvorrichtung 8 eingeführt und gelangen auf ein Rotationssiegelwerkzeug, nämlich eine Siegelwalze 5 und unter eine Ultraschall-Einrichtung 6. Die Siegelwalze 5 weist Ausnehmungen 9 auf in denen der die Füllmenge 3 aufweisende Bereich zu liegen kommt. Mittels der Ultraschall-Einrichtung 6 werden die Randbereiche der Bahnen um die Füllmenge 3 miteinander verschweißt. Nach dem Versiegeln verläßt eine Produktbahn 7 die Vorrichtung 8. Es müssen nur noch die Aufgussbeutel 1 ausgestanzt werden.

## Patentansprüche

1. Vorrichtung zum Verbinden von Filtermaterialien mittels Ultraschall mit einer Siegelwalze und einer Ultraschall-Einrichtung, welche einen Siegelspalt bilden, zwischen den mindestens zwei miteinander zu verbindende Filtermaterialbahnen mit positionierten Füllmengen geführt werden, wobei die Siegelwalze Ausnehmungen für die Füllmengen und diese Ausnehmungen umgebende Ränder aufweist, über die mittels der Ultraschall-Einrichtung die Filtermaterialbahnen miteinander Verscheißbar sind.

2. Verfahren zum Verbinden von Filtermaterialien mittels Ultraschall, bei dem mindestens zwei Filtermaterialbahnen mit positionierten Füllmengen zwischen eine Siegelwalze und eine Ultraschall-Einrichtung geführt werden und über die Ultraschall-Einrichtung die Filtermaterialbahnen wenigstens in dem Bereich um die Füllmengen miteinander verschweißt oder versiegelt werden.
